# EUROPÄISCHE PATENTANMELDUNG

(11) **EP 4 622 273 A1**
(43) Veröffentlichungstag der Anmeldung: **24.09.2025**
(21) Anmeldenummer: 24165233.8
(22) Anmeldetag: 21.03.2024
(51) Int. Cl.: H04N 21/218, H04N 21/2187, H04N 21/414, H04N 21/6587, H04N 21/81, H04N 23/698, H04N 23/90

(54) **VERFAHREN UND SYSTEM ZUR ÜBERTRAGUNG VON 360°- LIVE VIDEOSTREAMS**

(71) Anmelder: Softseed Technologies GmbH, 10178 Berlin (DE)
(72) Erfinder: Klein, Arno, 76829 Landau in der Pfalz (DE)
(74) Vertreter: Bösherz Goebel Patentanwälte

(57) **Zusammenfassung**

Die Erfindung betrifft ein Verfahren (100) zur Übertragung von 360°- Live Videostreams eines Virtual Reality Live Ereignisses in Echtzeit, wobei das Verfahren (100) durch ein Server-System (30) wiederholt und in beliebiger Reihenfolge durchgeführt wird:
- Bereitstellen (101) von wenigstens zwei 360°- Live-Videostreams in 3D, wobei ein jeweiliger 360°- Live-Videostream aus mehreren, zueinander synchronen 2D-Kamerabildern erstellt wird, und wobei jeder der wenigstens zwei 360°-Live-Videostreams jeweils eine andere Perspektive des VR-Live Ereignisses für einen Endnutzer spezifiziert,
- Empfangen (102) einer Anfrage von einem Endgerät (10) des Endnutzers für einen Abruf eines der wenigstens zwei 360°-Live-Videostreams auf Basis einer ausgewählten Perspektive durch den Endnutzer,
- Zuordnen (103) des einen der wenigstens zwei 360°-Live-Videostreams basierend auf der empfangenen Anfrage für den Abruf, um den angefragten 360°-Live-Videostream zu übertragen,
- Übertragen (104), an das Endgerät (20), des einen der wenigstens zwei 360°-Live-Videostreams basierend auf dem Zuordnen (103).

Ferner betrifft die Erfindung ein System, ein Endgerät sowie ein Computerprogramm.

## Beschreibung

Die vorliegende Erfindung betrifft ein Verfahren zur Übertragung von 360°- Live Videostreams eines Virtual Reality Live Ereignisses in Echtzeit. Ferner bezieht sich die Erfindung auf einen Server-System, ein Endgerät sowie Computerprogrammen zu diesem Zweck.

### Stand der Technik

Durch die Fortschritte in der Informations- und Kommunikationstechnologie ist es möglich, den Nutzern eine Vielzahl von Multimedia-Inhalten anzubieten. Insbesondere die Entwicklung von Multimediasystemen wie 3D-Fernsehen hat zu einem rapiden Anstieg der Nachfrage nach immersiven Medieninhalten geführt.

Virtual Reality-Videos finden zwar vereinzelt in einigen Bereichen Anwendung, sind aber im Vergleich zu 2D-Videos immer noch in zahlreichen technischen Bereichen wie der Bilderfassung, Bildverarbeitung, Datenvolumen, Synchronisierung und Anzeigemethoden eine technische Herausforderung. Da das Interesse an immersiven Inhalten, insbesondere Virtual Reality Inhalten wächst, wird an verschiedenen technischen Methoden bzw. die Verwendung von unterschiedlichen Technologien gearbeitet, um die technischen Herausforderungen bzw. Probleme zu lösen. So ist zu beobachten, dass vor allem mit der Weiterentwicklung von Bildvisualisierungsgeräten und dem Aufkommen neuer und schnellerer Kommunikationstechnologien wie beispielsweise 5G-Mobilfunk die Nachfrage für 3D-Live-Videos zunimmt.

Um die oben genannten Probleme zu lösen, bietet die vorliegende Erfindung ein Konzept für einen Echtzeit-Streaming-Dienst für 3D-Videos für Live-Events, welcher ein qualitativ hochwertiges und immersives VR-Erlebnis bereitstellt und gleichzeitig benutzerfreundlich und für eine breite Nutzerbasis zugänglich ist.

### Offenbarung der Erfindung

Gegenstand der Erfindung ist ein Verfahren mit den Merkmalen des Anspruchs 1, ein Server mit den Merkmalen des Anspruchs 9, ein Computerprogramm mit den Merkmalen des Anspruchs 10, ein Verfahren mit den Merkmalen des Anspruchs 11, ein Endgerät mit den Merkmalen des Anspruchs 12 sowie ein Computerprogramm mit den Merkmalen des Anspruchs 13. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Server, dem erfindungsgemäßen Computerprogramm, dem erfindungsgemäßen Verfahren, dem erfindungsgemäßen Endgerät sowie dem erfindungsgemäßen Computerprogramm, und jeweils umgekehrt, so dass bezüglich der Offenbarung der Erfindung stets auch eine wechselseitige Bezugnahme möglich ist.

Gegenstand der Erfindung ist insbesondere ein Verfahren zur Übertragung von 360°- Live Videostreams eines Virtual Reality Live Ereignisses in Echtzeit, wobei das Verfahren durch ein Server-System wiederholt und in beliebiger Reihenfolge durchgeführt wird.

In einem ersten Schritt werden wenigstens zwei 360°- Live-Videostreams in 3D bereitgestellt, wobei ein jeweiliger 360°- Live-Videostream aus mehreren, zueinander synchronen 2D-Kamerabildern erstellt wird, und wobei jeder der wenigstens zwei 360°-Live-Videostreams jeweils eine andere Perspektive des VR-Live Ereignisses für einen Endnutzer spezifiziert.

Dies ermöglicht es, dass der Endnutzer zwischen verschiedenen Live-Videostreams wählen kann, um je nach Auswahl eine unterschiedliche Perspektive von dem Live-Event zu haben. Als Perspektive kann vorgesehen sehen sein, dass der Endnutzer insbesondere aus der Sicht eines Zuschauers im Publikum das Live-Event verfolgen kann. Würde er eine andere Perspektive wählen, würde er damit einen anderen Livestream abrufen und könnte dort dann beispielsweise das Live-Event aus der Sicht eines Trainers oder eines Torwarts einer der beiden Mannschaften mitverfolgen.

Als 360°- Live-Videostream in 3D kann verstanden werden, dass dieser Livestream aus mehreren 2D-Kameras, welche insbesondere in einem Kreis angeordnet sein können und deren Kamerasichtfelder so zueinander ausgerichtet sind, dass eine vollständige 360 Abdeckung gewährleistet werden kann. Ferner weist der 360°- Live-Videostream eine stereoskopische 3D-Darstellung auf, um ein räumliches Tiefenempfinden zu ermöglichen. Die Auflösung kann vorzugsweise als 8K-Videosream spezifiziert sein. Ferner umfasst der 360°- Live-Videostream ein räumliches Audio, um die 3D- Erfahrung zu verbessern.

Unter einem VR-Live-Ereignis kann insbesondere eine Live-Veranstaltung verstanden werden, die in Virtual Reality (VR) erlebt werden kann. Dabei können Endnutzer mithilfe von Endgeräten wie z.B. VR-Headsets und entsprechender Technologie an einem Ereignis teilnehmen, als wären sie physisch vor Ort. Ein solches Ereignis kann z.B. ein Sport-Event wie beispielsweise ein Fußballspiel oder ein Tennis-Spiel oder eine andere Sportveranstaltung oder ein Live-Konzert sein. Durch die Teilnahme per Live-Videostream können die Teilnehmer in eine immersivere Umgebung eintauchen, die ihnen das Gefühl gibt, tatsächlich am Veranstaltungsort zu sein.

Die Zusammensetzung, das sogenannte "Stitching", der 2D-Kamerabilder bzw. der einzelnen Datenfeeds kann unter Verwendung von Algorithmen, die für nahtlose Übergänge sorgen, erfolgen. Die Algorithmen, die für das Live-Stitching verwendet werden, fügen die einzelnen Kamerabilder so zusammen, dass die Übergänge zwischen ihnen nahtlos sind. Dies wird erreicht, indem die Algorithmen die Übereinstimmungen zwischen den Rändern der verschiedenen Videofeeds identifizieren und diese Übereinstimmungen verwenden, um die Feeds so zu positionieren, dass sie perfekt zusammenpassen.

Ferner können durch die Verwendung von Algorithmen auch Anpassungen an den Farben und der Beleuchtung der verschiedenen Datenfeeds vorgenommen werden, um sicherzustellen, dass sie visuell konsistent sind.

Die Synchronität der 2D-Kamerabilder erfolgt durch eine Bildsynchronisation, insbesondere durch den Abgleich der Zeitstempel, die jedem Frame jedem Videofeed zugeordnet sind. Die Algorithmen stellen sicher, dass die Frames, die zur gleichen Zeit aufgenommen wurden, gleichzeitig im zusammengesetzten, d.h. "gestitchten" Video angezeigt werden. Damit wird sichergestellt, dass die Bewegung im zusammengesetzten Video flüssig und konsistent erscheinen. Ferner können auch Methoden wie maschinelles Lernen und künstliche Intelligenz eingesetzt werden, um die Qualität des Live-Stitching weiter zu verbessern. Diese können beispielsweise dazu verwendet werden, um Vorhersagen über zukünftige Frames zu treffen und so die Stitching-Algorithmen zu optimieren, oder um komplexe Muster in den Daten zu erkennen, die für herkömmliche Algorithmen schwer zu handhaben wären.

In einem nächsten Schritt wird eine Anfrage von einem Endgerät des Endnutzers empfangen für einen Abruf eines der wenigstens zwei 360°-Live-Videostreams auf Basis einer ausgewählten Perspektive durch den Endnutzer bereitgestellt.

Die Anfrage eines Endnutzers für einen Abruf eines 360°-Live-Videostreams kann eine Information umfassen, welche dem Server-System anzeigt, welcher Videostream der Endnutzer insbesondere aus einer Auswahl von verschiedenen Streams abrufen möchte. Die Anfrage bewirkt eine Initiierung des Prozesses einer Livestream-Übertragung.

Im nächsten Schritt wird einer der wenigstens zwei 360°-Live-Videostreams zugeordnet basierend auf der empfangenen Anfrage für den Abruf, um den angefragten 360°-Live-Videostream zu übertragen.

Das Server-System verarbeitet die empfangene Anfrage des Endnutzers und ordnet den angefragten Livestream für eine Übertragung zu.

Im nächsten Schritt wird einer der wenigstens zwei 360°-Live-Videostreams an das Endgerät übertragen basierend auf dem Zuordnen.

Dies bewirkt den Beginn der Übertragung des Livestreams für den Endnutzer.

Außerdem kann es im Rahmen der Erfindung von Vorteil sein, dass das Übertragen die weiteren nachfolgenden Schritte umfasst:
- Starten des Übertragens des einen der wenigstens zwei 360°-Live-Videostreams, wobei eine Übertragungsrate während einer Startphase der Übertragung zunächst eine niedrige Bitrate aufweist, um ein schnelles Starten zu ermöglichen,
- Anpassen der Übertragungsrate des gestarteten einen der wenigstens zwei 360°-Live-Videostreams basierend auf dem Verhältnis zwischen Bildqualität und Übertragungsrate, um unabhängig von der Verbindung des Endnutzers eine kontinuierliche Wiedergabe zu gewährleisten.

Dies hat den Vorteil, dass der ausgewählte Stream bei zunächst niedrigerer Bitrate mit minimaler Latenz schneller geladen und dem Endnutzer angezeigt werden kann. Nach dem Starten des Livestreams kann die Übertragung dann an die Bandbreite, welche für das Streaming bereitgestellt wird, angepasst werden. Dies kann insbesondere schrittweise erfolgen, bis ein optimales Verhältnis zwischen Bildqualität und Übertragungsgeschwindigkeit erreicht ist. Das Verhältnis zwischen Bildqualität und Übertragungsrate kann durch verschiedene Faktoren bestimmt werden, insbesondere in Bezug auf digitale Bildübertragungssysteme wie beispielsweise Videoübertragungen über das Internet oder drahtlose Netzwerke.

Eine Wahl eines geeigneten Kompressionsverfahrens kann die Bildqualität und die erforderliche Übertragungsrate direkt beeinflussen. Beispielsweise bieten verlustfreie Kompressionsverfahren eine hohe Bildqualität, erfordern jedoch in der Regel eine höhere Übertragungsrate im Vergleich zu verlustbehafteten Kompressionsverfahren, die zu einer geringeren Bildqualität führen können.

Ferner kann die Auflösung eines Bildes die Bildqualität beeinflussen. Höhere Auflösungen führen zu detaillierteren Bildern, benötigen jedoch auch mehr Bandbreite für die Übertragung. Die Bildrate oder Bildwiederholrate pro Sekunde kann ebenfalls ein Einflussfaktor auf die Bildqualität sein. Höhere Bildraten führen zu flüssigeren Bewegungen, erfordern jedoch auch mehr Daten für die Übertragung. Ferner kann eine Komplexität des Bildinhalts, einschließlich der Bewegung und der Anzahl der Farben, die erforderliche Übertragungsrate beeinflussen. Beispielsweise erfordern Videos mit schnellen Bewegungen oder vielen Details eine höhere Datenrate, um eine akzeptable Bildqualität zu gewährleisten.

Vorteilhafterweise kann im Rahmen der Erfindung vorgesehen sein, dass das Übertragen die weiteren nachfolgenden Schritte umfasst:
- Empfangen einer Nachricht umfassend eine Information bezüglich einer ermittelten Änderung einer Blickrichtung des Endnutzers für den an das Endgerät übertragenen 360°- Live Videostream,
- Anpassen des übertragenen 360°-Live Videostream in Abhängigkeit der ermittelten Änderung der Blickrichtung des Endnutzers, wobei das Anpassen auf Basis eines Algorithmus, insbesondere eines Codecs, erfolgt, wobei der Algorithmus in Echtzeit eine Auflösung für einen Bildausschnitt des übertragenen 360°-Live Videostreams bestimmt, welcher der geänderten Blickrichtung des Endnutzers entspricht.

Die in einer Nachricht empfangenen Blickrichtungsdaten, die insbesondere durch das Endgerät des Endnutzers erfasst werden können, werden in Echtzeit empfangen. Diese Daten können dann verwendet werden, um den übertragenen VR-Live-Stream anzupassen, bevor er an das Endgerät gesendet wird. Dies könnte beispielsweise durch Anpassung des Ausschnitts des 360- Grad-Videos, der an das Endgerät gestreamt wird, erfolgen.

In dem Fall, dass eine niedrige Latenz oder eine hohe Bildrate erforderlich ist, kann die Blickrichtungssteuerung auch dezentral ausgeführt werden. Dabei kann dann ein, beispielsweise dezentraler, Cloud-Server oder ein dezentraler Server für das Server-System verwendet werden. Dies bedeutet, dass der dezentrale Server den gesamten 360-Grad-VR-Live-Stream vom Server-System empfangen würde und dann basierend auf den Blickrichtungsdaten des Endnutzers den entsprechenden Ausschnitt des Videos auswählen und an das Endgerät senden könnte.

Es sollte in dem vorgenannten Fall beachtet werden, dass die erforderliche Implementierung von einer Konfiguration des Server-Systems und den Anforderungen des Endnutzers abhängen kann.

Es kann für die Berücksichtigung der Blickrichtung vorgesehen sein, dass ein Codec verwendet wird, der die Blickrichtung des Endnutzers bezogen auf einen Kameraausschnitt berücksichtigen kann. Auf dem Server System wird ein Livestream mit einer inhomogenen Pixeldichte erzeugt. In Bereichen, auf die der Betrachter schaut, d.h. seiner Blickrichtung, stellt das Server System eine hohe Pixeldichte und Auflösung bereit, während in Bereichen, die der Endnutzer nicht betrachtet, d.h. nicht in seiner Blickrichtung, nur eine grobe Auflösung bereitgestellt wird. Dies ermöglicht eine erhöhte Bildqualität in Blickrichtung.

Ferner können hinsichtlich der Verfolgung der Blickrichtung beispielsweise eine Verwendung von Gyroskopen, Beschleunigungsmessern oder anderen Sensoren vorgesehen sein. Gyroskope können eine Winkelgeschwindigkeit messen, d.h. wie schnell sich der Kopf des Endnutzers in eine bestimmten Richtung dreht. Diese Information kann verwendet werden, um die Blickrichtung des Endnutzers in der virtuellen Umgebung zu aktualisieren. Ein Beschleunigungsmesser kann verwendet werden, um die lineare Beschleunigung des Kopfes des Benutzers zu messen. Damit kann erkannt werden, ob der Benutzer seinen Kopf nach vorne, hinten, links oder rechts neigt. Andere Sensoren, wie z. B. ein Magnetometer, können verwendet werden, um zusätzliche Informationen über die Ausrichtung des Kopfes des Endnutzers zu liefern. Sie können beispielsweise dazu beitragen, die Blickrichtung des Benutzers genauer zu bestimmen. Die Daten von diesen Sensoren werden kontinuierlich erfasst und analysiert, um die Position und Ausrichtung des Kopfes des Endnutzers in Echtzeit zu bestimmen. Diese Informationen werden dann verwendet, um den VR-Live-Stream entsprechend anzupassen. Wenn der Endnutzer beispielsweise seinen Kopf nach links dreht, wird der VR-Live-Stream so angepasst, dass die virtuelle Umgebung entsprechend verschoben wird, um die Illusion zu erzeugen, dass der Endnutzer tatsächlich seinen Kopf innerhalb der virtuellen Umgebung des Live-Events dreht.

Außerdem ist es von Vorteil, wenn das Verfahren den weiteren nachfolgenden Schritt umfasst:
- Generieren einer Liste für die Zuordnung eines angefragten Abrufs bezüglich der bereitgestellten wenigstens zwei 360°-Live-Videostreams, wobei die Liste für jeden der wenigstens zwei 360°-Live-Videostreams eine eindeutige Adresse, insbesondere eine URL, aufweist.

Dies ermöglicht eine schnellere und komfortablere Auswahl durch den Endnutzer. Die Liste kann eine listenförmige Darstellung von verschiedenen, verfügbaren Livestreams sein, aus der der Endnutzer auswählen kann.

Es kann ferner möglich sein, dass das Empfangen den weiteren nachfolgenden Schritt umfasst:
- Empfangen einer weiteren Anfrage von dem Endgerät des Endnutzers für einen Abruf eines anderen der wenigstens zwei 360°-Live-Videostreams auf Basis eines Wechsel der ausgewählten Perspektive durch den Endnutzer.

Dies hat den Vorteil, dass das Server-System dem Endnutzer eine andere Perspektive als die derzeit an den Endnutzer übertragene Perspektive als Livestream für eine Übertragung bereitstellen kann. Ferner ermöglicht dies, dass der Endnutzer durch den einfacheren Wechsel zwischen den Perspektiven zu dem Live-Event einen noch stärkeren immersiven Eindruck erfahren kann.

Des Weiteren kann vorgesehen sein, dass das Verfahren die weiteren nachfolgenden Schritte umfasst:
- Empfangen von mehreren, zueinander synchronen 2D-Kamerabildern in Echtzeit,
- Erstellen von wenigstens zwei 360°- Live Videostreams in 3D auf Basis der empfangenen, zueinander synchronen 2D-Kamerabilder durch einen Stitching-Server des Server-Systems, wobei mehrere synchron aufgenommene 2D-Kamerabilder wenigstens einen 360°- Live Videostream in 3D in Echtzeit spezifizieren.

Dies bewirkt, dass durch ein Zusammenfügen einzelner 2D-Kamerabilder ein kontinuierliches 360° 3D-Videobild generiert werden kann. Der Stitching-Server kann Video- oder Bilddaten von mehreren Kameras oder Quellen empfangen. Er kombiniert die empfangenen Daten, um ein zusammenhängendes Bild oder Video zu erzeugen. Der Stitching-Server arbeitet in Echtzeit, um eine schnelle und nahtlose Integration der verschiedenen Quellen zu ermöglichen. Der Stitching-Server kann Bildkorrektur- und Ausrichtungsalgorithmen verwenden, um Verzerrungen oder Ungenauigkeiten in den eingehenden Datenströmen zu korrigieren und sicherzustellen, dass die Ausgabe ein konsistentes und korrektes Bild liefert. Das hat den Vorteil, dass der Stitching-Server das zusammengesetzte Bild oder Video in Echtzeit zu streamen, um Benutzern die Live-Anzeige des gestitchten Inhalts zu ermöglichen.

Der Stitching-Server kann für das Zusammensetzen Algorithmen verwenden, welche Kriterien wie z.B. eine niedrige Latenz (Low-Latency) und einen hoher Durchsatz (High-Throughput) berücksichtigen, um die zeitaufwendigen Berechnungen des Stitchings ohne Verzögerungen zu bewältigen. Eine Stitching-Software des Stitching-Servers umfasst eine Auswahl an Algorithmen, die speziell für eine VR-Verarbeitung bereitgestellt werden können und Parameter hinsichtlich einer Bildsynchronisation, zur Angleichung von Helligkeits- und Farbunterschieden zwischen den einzelnen Kamerabildern und zur Korrektur von Linsenverzeichnungen aufweisen können. Ziel ist es, ein einheitliches und realitätsnahes Bild zu schaffen, in dem Übergänge zwischen den Bildern verschiedener Kameras nicht wahrnehmbar sind.

Ferner können mittels der Stitching-Software auch Sichtfeld-Überlappungen und Geometrieanpassungen ausgeführt werden, was bei der Erzeugung eines räumlichen 3D-Bildes zu berücksichtigen ist. Dabei werden auch Tiefeninformationen des Bildes verarbeitet, um eine korrekte Darstellung von Nähe und Distanz im VR-Raum zu gewährleisten. Es kann vorgesehen sein, dass für die Stitching-Software GPU-beschleunigte Verarbeitungspipelines und speicher-effiziente Datenstrukturen verwendet werden.

Sobald die einzelnen Streams zu einem zusammenhängenden Bild zusammengefügt wurden, wird das resultierende VR-Video für eine Übertragung vorbereitet. Der Stitching-Server kann dazu beispielsweise Kompressionstechniken verwenden, um das Videomaterial datenstrom-effizient zu übertragen, ohne dabei die Bildqualität zu beeinträchtigen.

Gemäß einem weiteren Vorteil kann vorgesehen sein, dass das System einen dezentrale Server, umfasst, wobei der dezentrale Server das Übertragen von Anfragen und/oder das Übertragen des einen der wenigstens zwei 360°-Live-Videostreams für das Endgerät koordiniert,
wobei das Empfangen den nachfolgenden Schritt umfasst:
   - Empfangen einer Anfrage von dem dezentralen Server für den Abruf eines der wenigstens zwei 360°-Live-Videostreams auf Basis einer ausgewählten Perspektive durch den Endnutzer, wobei der Endnutzer seine Auswahl des einen der wenigstens zwei 360°-Live-Videostreams mittels des Endgeräts an den dezentralen Server zur Weiterleitung an das System übermittelt,
und wobei das Übertragen den nachfolgenden Schritt umfasst:
   - Übertragen des einen der wenigstens zwei 360°-Live-Videostreams an den dezentralen Server zur Zwischenspeicherung, insbesondere zur Optimierung und/oder zur Weiterleitung des einen der wenigstens zwei 360°-Live-Videostreams an das Endgerät, um eine kontinuierliche Wiedergabe zu gewährleisten.

Es ist ferner denkbar, dass der dezentrale Server als, vorzugsweise virtueller, Cloud-Server oder als ein Stand-Alone-Server ausgebildet ist.

Der dezentrale Server kann als Cloud-Server oder Edge-Cloud-Server ausgebildet sein. Der Cloud-Server kann beispielsweise als Gruppierung von einem oder mehreren virtuellen Servern ausgestaltet sein. Alternativ kann auch der dezentrale Server als Stand-Alone-Server vorgesehen sein.

Der dezentrale Server kann den Livestream vom Server-System laden und weiter verarbeiten. Dies ermöglicht es, die Performance für ein Endgerät des Endnutzers weiter zu optimiert. Ferner ermöglicht es, dass auf Endgeräten wie beispielsweise VR-Brillen mit einer begrenzten Leistung eine höhere Bildqualität gewährleisten werden kann. Dies hat den Vorteil, dass eine teure Endgeräte-Hardware mit hoher Rechenleistung nicht erforderlich ist und kann ferner die Kosten für die Stream-Übertragung senken.

Der dezentrale Server wie auch der (Edge-)Cloud-Server können die Streams empfangen und führen unter Verwendung fortgeschrittener KI-Technologien weitere Optimierungen durch, um die Darstellung auf den Endgeräten zu verfeinern. Diese Verbesserungen sind speziell darauf ausgerichtet, die Inhalte sowohl an spezifische Displayeigenschaften anzupassen als auch eine personalisierte Nutzung zu ermöglichen. Ferner kann der Server den empfangenen 360°-Live-Video-Stream speichern und in Echtzeit verbessern.

Der dezentrale Server kann Algorithmen des maschinellen Lernens verwenden, um jeden Bildausschnitt zu analysieren und aufzubereiten. Dazu werden Parameter für die Anpassung von Farbqualität, Schärfe und Kontrast sowie das Ausbalancieren von Helligkeitsstufen verwendet, um die VR-Erlebnisse realistischer und angenehmer für das Auge zu gestalten. Soundverbesserungen werden durch ähnliche Methoden erreicht, um sicherzustellen, dass die Audioausgabe des VR-Inhalts 3D-Audioqualitäten wiedergibt, entsprechend dem Raum, den der Nutzer virtuell betritt.

Ebenfalls Gegenstand der Erfindung ist einen Server-System zur Übertragung von 360°- Live Videostreams eines Virtual Reality Live Ereignisses in Echtzeit, umfassend:
- ein 360°- Stereobild-Kamerasystem, wobei das Kamerasystem wenigstens zwei 360°- Stereobild - Kameras für eine Aufnahme eines Virtual Reality Live Ereignisses umfasst, wobei eine 360°- Stereobild - Kamera eine kreisförmige Anordnung von mehreren 2D-Kameras aufweist,
- einen Stitching-Server für ein Erstellen von 360°- Live Videostreams in 3D basierend auf den in Echtzeit empfangenen mehreren 2D-Kamerabildern,
- einen oder mehrere, vorzugsweise virtuelle, Server für die Bereitstellung von wenigstens zwei 360°- Live Videostreams in Echtzeit, welche als eine in skalierbare Cloud-Plattform ausgebildet sind, um ein Live-Streaming in Echtzeit an ein Endgerät eines Endnutzers auszuführen,
wobei das System dazu ausgebildet ist, das erfindungsgemäße Verfahren auszuführen. Damit bringt der erfindungsgemäße Server die gleichen Vorteile mit sich, wie sie ausführlich mit Bezug auf das erfindungsgemäße Verfahren beschrieben worden sind.

Ebenfalls Gegenstand der Erfindung ist ein Computerprogramm für ein Server-System, insbesondere ein Computerprogrammprodukt, umfassend Befehle, die bei der Ausführung des Computerprogramms durch das Server-System dieses veranlassen, das erfindungsgemäße Verfahren auszuführen. Damit bringt das erfindungsgemäße Computerprogramm die gleichen Vorteile mit sich, wie sie ausführlich mit Bezug auf das erfindungsgemäße Verfahren beschrieben worden sind.

Ebenfalls Gegenstand der Erfindung ist ein Verfahren zum Abrufen eines 360°-Live-Videostreams eines Virtual Reality Live Ereignisses in Echtzeit. Das Verfahren umfasst die nachfolgenden Schritte:
- Auswählen eines 360°- Live Videostreams, welcher auf einer Benutzeroberfläche eines Endgeräts angezeigt wird, wobei jeder der angezeigten 360°-Live-Videostreams jeweils eine andere Perspektive des VR-Live Ereignisses für einen Endnutzer spezifiziert,
- Senden einer Anfrage an ein Streaming-Server-System basierend auf dem Auswählen, um den 360°- Live Videostream abzurufen,
- Empfangen des an das Endgerät übertragenen 360°- Live Videostreams auf Basis der gesendeten Anfrage, um eine Teilnahme an dem VR-Live Ereignis zu ermöglichen.

Damit bringt das erfindungsgemäße Verfahren zum Abrufen eines 360°-Live-Videostreams die gleichen Vorteile mit sich, wie sie ausführlich mit Bezug auf das erfindungsgemäße Verfahren zur Übertragung von 360°- Live Videostreams beschrieben worden sind.

Ebenfalls Gegenstand der Erfindung ist ein Endgerät zum Abrufen eines 360°-Live-Videostreams eines Virtual Reality Live Ereignisses in Echtzeit, wobei das Endgerät dazu ausgebildet ist, das erfindungsgemäße Verfahren zum Abrufen eines 360°-Live-Videostreams auszuführen. Damit bringt das erfindungsgemäße Endgerät die gleichen Vorteile mit sich, wie sie ausführlich mit Bezug auf das erfindungsgemäße Verfahren zum Abrufen eines 360°-Live-Videostreams beschrieben worden sind. Ferner ermöglicht dies, dass der Endnutzer einen Empfang und einen Wiedergabe des optimierten 360°-Live-Videostreams auf dem Endgerät, wie z. B. einem VR-Headset ein immersives Seherlebnis erfahren kann. Ferner ermöglichen auf dem Endgerät bereitgestellte Echtzeiteinstellungen für Bildauflösung und Audioqualität eine personalisierte Nutzerinteraktion.

Ebenfalls Gegenstand der Erfindung ist ein Computerprogramm für ein Endgerät, insbesondere ein Computerprogrammprodukt, umfassend Befehle, die bei der Ausführung des Computerprogramms durch das Endgerät dieses veranlassen, das erfindungsgemäße Verfahren zum Abrufen eines 360°-Live-Videostreams auszuführen. Damit bringt das erfindungsgemäße Computerprogramm die gleichen Vorteile mit sich, wie sie ausführlich mit Bezug auf das erfindungsgemäße Verfahren zum Abrufen eines 360°-Live-Videostreams beschrieben worden sind.

Das Server-System oder das Endgerät kann als eine jeweilige Datenverarbeitungsvorrichtung vorgesehen sein, welche das jeweilige Computerprogramm ausführt. Es kann jeweils wenigstens einen Prozessor zur Ausführung des Computerprogramms aufweisen. Auch kann jeweils ein nicht-flüchtiger Datenspeicher vorgesehen sein, in welchem das jeweilige Computerprogramm hinterlegt und von welchem das jeweilige Computerprogramm durch den Prozessor zur Ausführung ausgelesen werden kann.

Ebenfalls ist es denkbar, dass die Datenverarbeitungseinrichtung zumindest einen integrierten Schaltkreis wie einen Mikroprozessor oder eine Anwendungsspezifische integrierte Schaltung (ASIC) oder ein Anwendungsspezifisches Standardprodukt (ASSP) oder einen digitalen Signalprozessor (DSP) oder einen Field Programmable Gate Array (FPGA) oder dergleichen umfasst. Sie kann ferner wenigstens eine Schnittstelle zum Datenaustausch, z. B. eine Ethernet-Schnittstelle oder eine Schnittstelle für LAN (Local Area Network) oder WLAN (Wireless Local Area Network) oder System-on-a-Chip (SoC) oder eine andere Funkschnittstelle wie Bluetooth oder Nahfeldkommunikation (NFC) aufweisen. Ferner kann sie als ein oder mehrere Steuergeräte, d. h. auch als ein System aus Steuergeräten, ausgeführt sein. Sie kann bspw. auch in einer Cloud und/oder als ein Server vorgesehen sein, um über die Schnittstelle die Datenverarbeitung für eine lokale Anwendung zur Verfügung zu stellen. Auch ist es möglich, dass sie als ein mobiles Gerät, wie bspw. ein Smartphone, ausgeführt ist.

Ebenfalls Gegenstand der Erfindung kann ein computerlesbares Speichermedium sein, welches das erfindungsgemäße Computerprogramm umfasst. Das Speichermedium ist bspw. als ein Datenspeicher wie eine Festplatte und/oder ein nicht-flüchtiger Speicher und/oder eine Speicherkarte ausgebildet. Das Speichermedium kann z. B. in der Datenverarbeitungsvorrichtung als Computer integriert sein.

Darüber hinaus kann das jeweilige erfindungsgemäße Verfahren auch als ein jeweiliges computerimplementiertes Verfahren ausgeführt sein. Alternativ oder zusätzlich kann zumindest einer der offenbarten jeweiligen Verfahrensschritte computer-implementiert sein und/oder automatisiert durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
Fig. 1 eine schematische Darstellung des erfindungsgemäßen Verfahrens gemäß Ausführungsbeispielen der Erfindung,
Fig. 2 eine weitere schematische Darstellung eines Verfahrens aus Endnutzersicht gemäß Ausführungsbeispielen der Erfindung,
Fig. 3 eine schematische Übersicht des Systems gemäß einem Ausführungsbeispiel der Erfindung,
Fig.4 eine weitere schematische Übersicht des Systems gemäß einem Ausführungsbeispiel der Erfindung.

In den nachfolgenden Figuren werden für die gleichen technischen Merkmale auch von unterschiedlichen Ausführungsbeispielen die identischen Bezugszeichen verwendet.

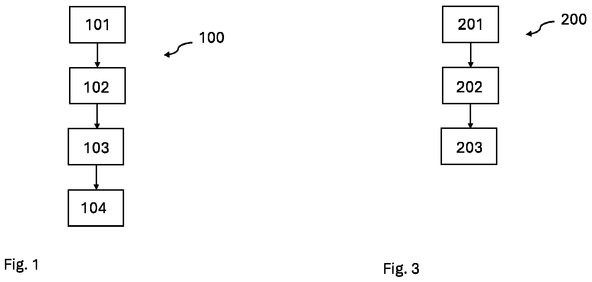

Fig. 1 zeigt eine schematische Darstellung des erfindungsgemäßen Verfahrens gemäß Ausführungsbeispielen der Erfindung. Insbesondere wird in Fig. 1 ein Verfahren 100 zur Übertragung von 360°- Live Videostreams eines Virtual Reality Live Ereignisses in Echtzeit dargestellt. Das Verfahren 100 wird durch ein Server-System 30 wiederholt und in beliebiger Reihenfolge durchgeführt. Gemäß Schritt 101 werden wenigstens zwei 360°- Live-Videostreams in 3D bereitgestellt, wobei ein jeweiliger 360°- Live-Videostream aus mehreren, zueinander synchronen 2D-Kamerabildern erstellt wird. Jeder der wenigstens zwei 360°-Live-Videostreams spezifiziert jeweils eine andere Perspektive des VR-Live Ereignisses für einen Endnutzer. In Schritt 102 wird eine Anfrage von einem Endgerät 10 des Endnutzers empfangen für einen Abruf eines der wenigstens zwei 360°-Live-Videostreams auf Basis einer ausgewählten Perspektive durch den Endnutzer. In Schritt 103 wird dann der eine der wenigstens zwei 360°-Live-Videostreams zugeordnet basierend auf der empfangenen Anfrage für den Abruf, um den angefragten 360°-Live-Videostream zu übertragen. In Schritt 104 wird sodann an das Endgerät 10 der eine der wenigstens zwei 360°-Live-Videostreams basierend auf der Zuordnung in Schritt 103 übertragen.

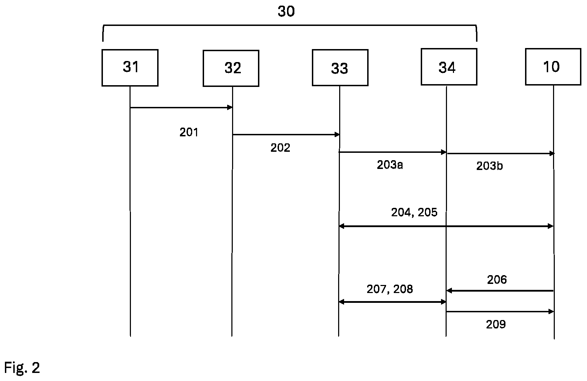

Fig. 2 zeigt eine schematische Übersicht des Systems gemäß Ausführungsbeispielen der Erfindung. Insbesondere zeigt Fig. 2 ein Server-System 30 für einen Echtzeit-Prozess für ein Virtual Reality (VR) 3-D 360° Video-Streaming, wobei der gesamte Prozess des VR-Systems von der Content-Erstellung bis hin zum Endnutzer 5 abgebildet ist. Das Server-System 30 zur Übertragung von 360°- Live Videostreams umfasst ein 360°- Stereobild-Kamerasystem 31, wobei das Kamerasystem 31 wenigstens zwei 360°- Stereobild - Kameras für eine Aufnahme eines Virtual Reality Live Ereignisses umfasst. Eine 360°- Stereobild - Kamera 31 kann eine Anordnung von mehreren 2D-Kameras aufweisen, wobei die Anordnung vorzugsweise kreisförmig ausgebildet sein kann. Ferner wird in Fig. 2 ein Stitching-Server 32 für ein Erstellen von 360°- Live Videostreams in 3D dargestellt, wobei das Erstellen auf den in Echtzeit empfangenen 201 mehreren, zueinander synchronen 2D-Kamerabildern basiert. Ferner umfasst das System 30 einen oder mehrere Server 33 für die Bereitstellung von wenigstens zwei 360°- Live Videostreams in Echtzeit, welche beispielsweise an ein Content Delivery Network (CDN) angebunden sind, um eine Übertragung 203a,b an ein Endgerät 10 eines Endnutzers auszuführen.

In einem Ausführungsbeispiel gemäß Fig. 2 kann das Server-System 30 eine Anfrage von einem Endgerät 10 empfangen für einen Abruf eines 360°-Live-Videostreams auf Basis einer ausgewählten Perspektive durch den Endnutzer. Das Server-System 30 ordnet basierend auf der empfangenen 204 Anfrage für den Abruf einen der wenigstens zwei 360°-Live-Videostreams zu. Danach überträgt 205 das Server-System 30 den angefragten und zugeordneten 360°-Live-Videostream an das Endgerät 10. Alternativ kann bei Verwendung eines dezentralen Servers 34 oder eines Cloudservers 34 die Anfrage 206 vom dezentralen Server 34 empfangen und an das Server-System 30 weitergeleitet 207 werden. Das Server-System 30 ordnet die Anfrage dem passenden 360°-Live-Videostream zu und überträgt 208 diesen an den dezentralen Server 34. Der dezentrale Server 34 oder Cloud-Server 34 empfangen den Stream und senden 209 diesen an das Endgerät 10.

In Fig. 2 wird ferner schematisch ein beispielhaftes Kamerasystem 31 dargestellt, welches insbesondere einen Verbund von Hochleistungskameras umfasst, welche 3D-Videos in 8K-Auflösung aufnehmen können. Die Kameras des Systems 31 bzw. einer 360°- Stereobild - Kamera 31 sind so positioniert, dass ein vollständiges, umfassendes Kamerabild erzeugt und bereitgestellt werden kann, um alle Aspekte des Live-Ereignisses einzufangen. Die Auswahl der Kameraausrüstung ist maßgeblich für das VR-Erlebnis, da sie das Ausmaß und die Qualität der visuellen Daten bestimmt, die im weiteren Verlauf des Prozesses verarbeitet werden. Hochauflösende Kameras, die speziell für die 3D-Videoaufnahme in einem 360°-Umfeld ausgelegt sind, werden verwendet, um die virtuelle Realität zu erfassen. Für eine 8K-Videoaufnahme kann eine Anordnung von mehreren 2D-Kameras vorgesehen sein, die hochauflösende, zueinander synchrone Bilder liefern, um selbst nach der Postproduktion eine hohe Auflösung zu gewährleisten. Beispielsweise kann eine 360° Kamera 31 eine kreisförmigen Anordnung von mehreren 2-D Kameras aufweisen. Diese Kameras sind auf speziell angefertigten Rigs montiert, die das Kameramuster und die Platzierung präzise steuern können. Eine sorgfältig geplante Positionierung der 2D-Kameras ist erforderlich, um Überschneidungen im Blickfeld der Kameras erzeugen zu können. Dies ist eine Voraussetzung für ein effizientes "Stitching". D.h. in anderen Worten, dass die 2D-Kameras so angeordnet werden, dass sie einen nahtlosen Übergang zwischen den einzelnen Bildfeldern gewährleisten und sich zu einem korrekten Gesamtbild zusammenfügen lassen.

Eine Feinabstimmung der 2D-Kameraeinstellungen wie Blende, Belichtungszeit und Empfindlichkeit (ISO) ist notwendig, um das VR-Erlebnis möglichst real bzw. wirklichkeitsgetreu abzubilden. Die effektive Abstimmung einer 360° Kamera 31 kann damit einerseits die Bildqualität maximieren, und andererseits die Synchronität der jeweiligen Aufnahmen verschiedener Kameras gewährleisten. Ferner kann eine Kalibrierung jeder Kamera 31 ermöglichen, dass eine Farbtreue zwischen den Aufnahmen synchronisiert werden kann, um eine Realitätstreue des VR-Erlebnisses zu gewährleisten.

Die 360° Kameras 31 können so eingestellt sein, dass sie eine gleichzeitige, d.h. synchrone, Aufnahme aller Videodaten ermöglichen. Bei Live-Ereignissen ist die zeitgleiche Erfassung ein wichtiger Faktor, um eine präzise Darstellung dynamischer Sequenzen ohne Verzögerung oder Desynchronisation zu garantieren. Die aufgenommenen Daten können in einem Format vorliegen, das die anschließenden Verarbeitungsschritte unterstützt und in der Lage ist, die riesigen Datenmengen, die von 8K-Aufnahmen generiert werden, effizient zu handhaben.

Die Bilder der 2D-Kameras werden in Echtzeit und zueinander synchron an einen Stitching-Server 32 gestreamt 201 oder übertragen 201, wo sie zu einem nahtlosen 360° Stereo-Bild zusammengefügt werden. Aufgrund der enormen Datenmenge, die durch 8K-Videos erzeugt werden können, muss für das Gesamtsystem 30 eine Netzwerkinfrastruktur konfiguriert sein, um eine stabile, unterbrechungsfreie Übertragung der Rohdaten, d.h. der jeweiligen 2D-Kamerabilder, zu gewährleisten. Dies ist wichtig, um Latenzzeiten zu vermeiden und eine flüssige Echtzeitübertragung zu ermöglichen. Diese Rohdaten werden direkt an den Live-Stitching-Server 32 übertragen 201 , der die jeweiligen Datenfeeds von den jeweiligen 2D-Kameras in Echtzeit zu einem einheitlichen 360°- 3D-Videostream zusammensetzt. Dabei können Algorithmen verwendet werden, welche so ausgebildet sind, dass nahtlose Übergänge und ein immersives Eintauchen in das VR-Erlebnis gewährleistet werden. Der Stitching-Server 32 ist so dimensioniert, dass Videodaten in Echtzeit verarbeitet werden können. Die angewendeten Algorithmen berücksichtigen Kriterien wie z.B. eine niedrige Latenz (Low-Latency) und einen hoher Durchsatz (High-Throughput), um die zeitaufwendigen Berechnungen des Stitchings ohne Verzögerungen zu bewältigen.

Die zum Einsatz kommende Stitching-Software umfasst eine Auswahl an Algorithmen, die speziell für eine VR-Verarbeitung bereitgestellt werden können und Parameter hinsichtlich einer Bildsynchronisation, zur Angleichung von Helligkeits- und Farbunterschieden zwischen den einzelnen Kamerabildern und zur Korrektur von Linsenverzeichnungen aufweisen können. Ziel ist es, ein einheitliches und realitätsnahes Bild zu schaffen, in dem Übergänge zwischen den Bildern verschiedener Kameras nicht wahrnehmbar sind.

Ferner können mittels der Stitching-Software auch Sichtfeld-Überlappungen und Geometrieanpassungen ausgeführt werden, was bei der Erzeugung eines räumlichen 3D-Bildes zu berücksichtigen ist. Dabei werden auch Tiefeninformationen des Bildes verarbeitet, um eine korrekte Darstellung von Nähe und Distanz im VR-Raum zu gewährleisten. Es kann vorgesehen sein, dass für die Stitching-Software GPU-beschleunigte Verarbeitungspipelines und speicher-effiziente Datenstrukturen verwendet werden.

Der Stitching-Server 32 kann mit Mitteln der Qualitätssicherung eine kontinuierliche und effektive Qualität des gestitchten Videostreams gewährleisten. Spezialisierte Tools zur Beobachtung und Korrektur von Fehlern in Echtzeit können dabei unterstützen, um ein hohes Niveau der User Experience sicherzustellen. Diese Tools erlauben es, mögliche Fehler schnell zu erkennen und zu beheben, ohne das Live-Event zu unterbrechen. Durch die Verarbeitung und Zusammenführung der Einzelbilder zu einem kohärenten, gemeinsamen virtuellen Erlebnis wird das Fundament für das immersive Eintauchen in die virtuelle Welt gelegt.

Sobald die einzelnen Streams zu einem zusammenhängenden Bild zusammengefügt wurden, wird das resultierende VR-Video für eine Übertragung 203a,b vorbereitet. Der Stitching-Server 32 kann dazu Kompressionstechniken verwenden, um das Videomaterial datenstrom-effizient zu übertragen, ohne dabei die Bildqualität zu beeinträchtigen. Der resultierende Austausch von Daten muss dabei stets das Ziel verfolgen, das Endergebnis mit der geringstmöglichen Latenz für das Streaming vorzubereiten.

Das erstellte 360° Stereo-Bild kann dann vom Server-System 30, insbesondere mittels einem sogenannten Content Delivery Network (CDN) 33 zur Nutzung bereitgestellt oder übertragen 202 werden. Das Server-System 30 kann je nach Belastung durch Streaming-Abrufe skalierbar ausgestaltet sein, um eine optimale Performance und Verfügbarkeit der Streams zu gewährleisten.

Ein Content Delivery Network (CDN) 33 kann als ein System 33 verteilter Server verstanden werden, das darauf abzielt, Webinhalte räumlich relativ zum Endbenutzer zu liefern. Beim Streaming von VR-Inhalten werden diese Netzwerke verwendet, um Latenzzeiten zu reduzieren und die Belastung auf einzelne Server zu vermeiden, indem das Streaming-Aufkommen über ein Netzwerk von Proxy-Servern verteilt wird, die geografisch über verschiedene Regionen verteilt sind. Dies gewährleistet, dass die Inhalte auf dem schnellsten verfügbaren Weg zum Endbenutzer gelangen und optimiert die Performance für internationale Zielgruppen.

Eine Übertragung der VR-Inhalte kann auch eine weitere Ebene der Optimierung bedeuten. Hierzu gehört in der Regel eine Anpassung der Streaming-Qualität an die Netzwerkbedingungen, auch bekannt als adaptives Bitrate-Streaming. Das adaptive Bitrate-Streaming ermöglicht es, die Qualität des Streams dynamisch an die verfügbare Bandbreite der Endnutzer anzupassen, um Unterbrechungen oder Pufferungen zu vermeiden.

Eine Datenübertragung, insbesondere bei sensiblen Daten wie den für VR-Inhalte, erfordert robuste Verschlüsselungsprotokolle. Um den digitalen Content vor unbefugtem Zugriff zu schützen, sind sichere Übertragungsprotokolle erforderlich. Diese Protokolle sichern nicht nur die übertragenen Inhalte selbst, sondern auch die Privatsphäre der Benutzer, indem Daten verschlüsselt und Transaktionen über sichere Kanäle abgewickelt werden können.

Eine Überwachung der Netzwerkperformance und des Live-Stream-Zustands während der Übertragung ist vorteilhaft, um Probleme proaktiv zu erkennen und zu beheben. Tools zur Netzwerküberwachung und Echtzeit-Diagnose sind unerlässlich, um die Stabilität der VR-Datenübertragung zu gewährleisten und um rasch auf mögliche Komplikationen reagieren zu können.

In einem weiteren Ausführungsbeispiel umfasst das Server-System 30 ferner eine dezentrale Serverfunktion 34. Die dezentrale Serverfunktion 34 kann als Cloud-Server 34, Edge-Cloud-Server 34 oder als dezentraler Server 34 ausgebildet sein. Die Cloud-Server-Variante kann beispielsweise als Gruppierung von einem oder mehreren virtuellen Servern 34 dimensioniert sein. Alternativ kann auch ein dezentraler Server 34 als Stand-Alone-Server vorgesehen sein.

Bei der letzteren Variante kann der hochwertige Stream aus dem Netz vom Server-System 30 geladen 203a und auf dem dezentralen Server 34 weiter verarbeitet werden, insbesondere für eine Übertragung 203b an und eine Performance auf einem Endgerät 10 weiter optimiert werden. Dies ermöglicht es, auf Endgeräten 10 wie beispielsweise VR-Brillen mit begrenzter Leistung eine besonders hohe Bildqualität zu ermöglichen. Dies hat den Vorteil, dass eine teure Endgeräte-Hardware mit hoher Rechenleistung nicht erforderlich ist und kann ferner die Kosten für die Stream-Übertragung senken.

Der dezentrale Server 34 wie auch der (Edge-)Cloud-Server 34 können die Streams empfangen 203a und führen unter Verwendung fortgeschrittener KI-Technologien weitere Optimierungen durch, um die Darstellung auf den Endgeräten 10 zu verfeinern. Diese Verbesserungen sind speziell darauf ausgerichtet, die Inhalte sowohl an spezifische Displayeigenschaften anzupassen als auch eine personalisierte Nutzung zu ermöglichen. Ferner kann der Server 34 den empfangenen 360°-Live-Video-Content speichern und in Echtzeit verbessern. Ausgestattet mit leistungsfähigen Prozessoren, einer hochentwickelten Grafikkarte und schnellen Speicherlösungen, ist der Server 34 in der Lage, komplexe Kl-Algorithmen zu betreiben, die für die Bildoptimierung erforderlich sind.

Der (dezentrale) Server 34 kann Algorithmen des maschinellen Lernens verwenden, um jeden Bildausschnitt zu analysieren und aufzubereiten. Dazu werden Parameter für die Anpassung von Farbqualität, Schärfe und Kontrast sowie das Ausbalancieren von Helligkeitsstufen verwendet, um die VR-Erlebnisse realistischer und angenehmer für das Auge zu gestalten. Soundverbesserungen werden durch ähnliche Methoden erreicht, um sicherzustellen, dass die Audioausgabe des VR-Inhalts 3D-Audioqualitäten wiedergibt, entsprechend dem Raum, den der Nutzer virtuell betritt.

Um die VR-Inhalte individuell an die Präferenzen der Endnutzer anpassen zu können, kann der dezentrale Server 34 die Seh- und Hörpräferenzen seiner Nutzer mittels Feedback-Schleifen dynamisch anpassen. Darüber hinaus ermöglicht diese intelligente Technologie eine fein abgestimmte Anpassung der Inhalte an verschiedene Endgeräte, von VR-Headsets bis hin zu Smartphones und Tablets, die unterschiedliche Bildschirmspezifikationen und Prozessorkapazitäten aufweisen.

In den Ausführungsbeispielen in denen der dezentrale 34 als Cloud-basierte Plattform 34 oder Cloud-Server 34 ausgestaltet ist, können für das Streaming von VR-Inhalten und interaktiven Anwendungen ressourcen-effizient skaliert werden, was eine bedarfsorientierte Anpassung der Rechenleistung für Echtzeit-Video-Streaming ermöglicht.

Bei einer cloudbasierten Serverlösung 34 kann optional vorgesehen sein, dass ein Cloudgesteuertes Live-Stitching, ein adaptives Streaming, oder eine KI-basierte Bildoptimierung ausgeführt werden kann.

In Ausführungsbeispielen der Erfindung, in denen ein dezentraler Server 34 als ein Stand-Alone-Gerät mit einer Speicherkapazität von 8 TB verwendet werden kann, kann dieser Server 34 Funktionen bereitstellen wie z. B. ein lokales, hochauflösendes Streaming innerhalb von Privaträumen oder lokalen Netzwerken oder eine Offline-Medienverfügbarkeit.

Sowohl die Cloud-Plattform 34 als auch der Server 34 können so ausgebildet sein, dass sie in Kombination verwendet werden können, um dieselbe VR-Benutzererfahrung zu gewährleisten.

In einem weiteren Ausführungsbeispiel gem. Fig. 2 kann die Cloud-Plattform 34 als universeller Zugang zu VR-Inhalten verwendet werden und dabei von den dynamischen, personalisierten Merkmalen des Cloud-Betriebs profitieren. Der Server 34 als Stand-Alone-Lösung kann als spezialisiertes System für Endnutzer dienen, die Wert auf Privatsphäre legen und ein unabhängiges, lokales Streaming-Erlebnis ohne Cloud-Integration suchen. Zusammen bilden beide Lösungen in Kombination ein vollständiges VR-System, das auf die unterschiedlichen Bedürfnisse und Umgebungen seiner Nutzer ausgerichtet ist. Durch diese zweigleisige optionale Struktur kann das System eine flexible Lösung sowohl für breit gefächerte, Cloud-abhängige VR-Erlebnisse als auch für exklusive, lokal begrenzte Anwendungen bereitstellen.

In einem weiteren Ausführungsbeispiel kann die cloudbasierte Server-Plattform 34 prognosebasierte Algorithmen des maschinellen Lernens verwenden, um Vorhersagen für die Bewegungen und Änderungen im Bildmaterial zu erstellen. Ein Beispiel hierfür ist das "Predictive Frame Stitching". Dieser Ansatz zielt darauf ab, Unstimmigkeiten im zusammengesetzten Video vorzeitig zu erkennen und zu korrigieren, bevor sie vom Endnutzer wahrgenommen werden. Spezifische neuronale Netze, wie LSTM (Long Short Term Memory) Netzwerke, werden verwendet, die darauf trainiert sind, zeitliche Sequenzen zu analysieren und zukünftige Frames zu antizipieren. Dies ermöglicht eine effektive Vorhersage potenzieller Stitching-Fehler und trägt damit zu einem störungsfreien VR-Erlebnis bei.

In einem weiterem Ausführungsbeispiel nach Fig. 2 kann die Cloud-Server-Plattform 34 beispielsweise Machine Vision Algorithmen und tiefe neuronale Netzwerke verwenden, um weiche, nahtlose Übergänge an den Rändern der gestitchten Bildbereiche (Engl.: Edges) zu gewährleisten. Convolutional Neural Networks (CNNs), die für die Bilderkennung optimiert sind, werden mit umfangreichen Datenmengen von unterschiedlichsten Bildübergängen trainiert, um die Logik hinter effektiven Überblendungen zu lernen. Diese Netze sind darauf geschult, komplizierte Transitionen zu simulieren und zu optimieren und können damit sogar im Falle komplexer Bewegungsmuster oder Verdeckungen eine konsistente Bildzusammenführung garantieren.

In einem anderen Ausführungsbeispiel kann die cloudbasierte Server-Plattform z.B. ein Verfahren der adaptiven Optical Flow-Korrektur anwenden, um eine stetige Bewegungswahrnehmung über mehrere 3D-Live-Videostreams sicherzustellen. Diese Methode berücksichtigt fortlaufend die Bewegungsstrukturen innerhalb eines FOVs. Durch die Einbeziehung von Daten, die von den in VR-Headsets eingebetteten Bewegungssensoren erfasst werden, kann das System 34 Änderungen im sichtbaren Fluss (Optical Flow) des Videos erkennen und Anpassungen durchführen, um eine kontinuierliche Bewegungsdarstellung zu erhalten. Dies ist besonders effektiv bei der präzisen Synchronisation von Bewegungen über Schnitte und Übergänge hinweg und trägt maßgeblich zur Erhaltung der Immersion bei.

In einem weiteren Ausführungsbeispiel gemäß Fig. 2 kann die cloudbasierte Server Plattform 34 oder der Edge-Cloud-Server 34 unterschiedliche Komponenten für eine Hochleistungsperformance umfassen. Der Server 34 kann aufgewertete Grafikverarbeitungseinheiten (GPUs) aufweisen. Es wird dabei eine fortschrittliche GPU-Architektur dimensioniert, die speziell für die Verarbeitung hochauflösender VR-Inhalte entwickelt ist. Diese Architektur gewährleistet eine effiziente parallele Datenverarbeitung, notwendig für das Rendering komplexer Umgebungen in Virtual Reality. Die GPUs können dafür beispielsweise mit einer optimierten Renderpipeline ausgestattet sein, die das Live-Stitching von Videofeeds verschiedener Kameras unterstützt, Ray-Tracing für realitätsnahe Beleuchtung ermöglicht und komplizierte Shader-Berechnungen für eine authentische Darstellung von Texturen und Materialien durchführt. Zur Unterstützung von VR-spezifischen Anforderungen können die GPUs Asynchronous Time Warp (ATW) sowie Asynchronous Space Warp (ASW) bereitstellen, um Bewegungsunschärfe und Bildverzögerungen zu minimieren und ein flüssiges visuelles Erlebnis auch bei schnellen Kopfbewegungen zu gewährleisten.

In einem weiteren Ausführungsbeispiel nach Fig. 2 können die verwendeten grafischen Verarbeitungseinheiten einen schnellen Grafikspeicher aufweisen, der eine hohe Bandbreite und schnellen Zugriff auf Texturdaten und Framebuffer ermöglicht, um die für VR notwendige hohe Bildwiederholrate zu erreichen. Sogenannte GPGPU (General-Purpose Computing on GPU) können optional verwendet werden, um neben grafischen Berechnungen, auch allgemeine Berechnungsprozesse auszuführen. Diese so genannten GPGPU-Fähigkeiten erlauben es, Kl-gestützte Algorithmen direkt auf der GPU zu berechnen, was die Bildanalyse und -optimierung deutlich beschleunigen kann. Die GPU-Einheiten des Serversystems 34 unterstützen ferner moderne Videokodierungs- und -dekodierungsstandards, wie beispielsweise H.265 (HEVC) und AV1, um ein effizientes Streaming bei gleichzeitig hoher Videoqualität zu gewährleisten. Virtual Reality Multi-View-Technik: Mithilfe von Multi-View-Rendering können mehrere Projektionen in einem einzigen Durchlauf gerendert werden, was die Effizienz beim Erstellen von Bildern für unterschiedliche Blickwinkel erhöht, ein Schlüsselelement für VR-Headsets.

Fig. 3 zeigt eine weitere schematische Darstellung eines weiteren Verfahrens aus Endnutzersicht gemäß Ausführungsbeispielen der Erfindung. Insbesondere wird in Fig. 3 ein Verfahren 200 zum Abrufen eines 360°-Live-Videostreams eines Virtual Reality Live Ereignisses in Echtzeit. Das Verfahren 200 umfasst die nachfolgenden Schritte: in Schritt 201 wird ein 360°- Live Videostream ausgewählt, welcher auf einer Benutzeroberfläche eines Endgeräts 10 angezeigt wird. Jeder der angezeigten 360°-Live-Videostreams spezifiziert jeweils eine andere Perspektive des VR-Live Ereignisses für einen Endnutzer. In Schritt 202 wird dann eine Anfrage an einen Streaming-Server-System 30 gesendet, basierend auf dem Auswählen aus Schritt 201, um den 360°- Live Videostream abzurufen. In Schritt 203 wird der an das Endgerät 10 übertragene 360°- Live Videostreams empfangen auf Basis der gesendeten Anfrage gemäß Schritt 202, um eine Teilnahme an dem VR-Live Ereignis zu ermöglichen.

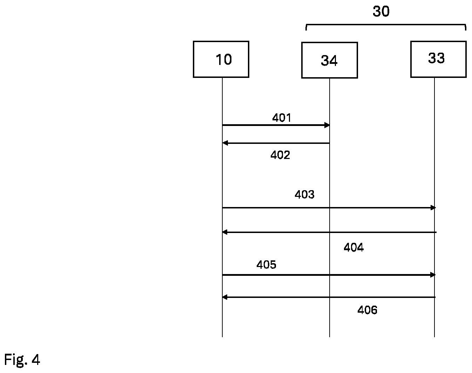

Fig.4 stellt eine weitere schematische Übersicht des Systems gemäß einem Ausführungsbeispiel der Erfindung dar. Insbesondere zeigt Fig. 4 die Endnutzeraktionen beim Abrufen eines 360°- Live Videostreams. Es kann vorgesehen sein, dass der Endnutzer eine Applikation (Abk.: App) auf seinem Endgerät 10 wie z.B. einem Mobiltelefon oder Smartphone oder Tablet oder einer VR-Brille verwenden kann, um einen 360°- Live Videostream abzurufen. D.h. es kann eine Applikation zum Übertragen eines 360°- Live Videostreams vorgesehen sein. Nach dem Öffnen der App kann der Endnutzer verfügbare 360°- Live Videostreams von einen Server 30 abrufen 401, welche im Gegenzug auf einer Benutzeroberfläche seiner App angezeigt 402 werden. Der Endnutzer kann einen der angezeigten Streams auswählen 403. Durch diese Auswahl 403 kann dem Endnutzer ein Vorschaubild des ausgewählten Streams gezeigt 404 werden. Der Endnutzer kann das Vorschaubild verwenden, z.B. durch Anklicken, um den Abruf des 360°- Live Videostreams zu starten. Dieses Starten wird als Anfrage zum Server 30 gesendet 405, damit als Reaktion auf diese Anfrage 405 der ausgewählte 360°- Live Videostream bereitgestellt und an das Endgerät 10 als Stream übertragen 406 wird. Es kann vorgesehen sein, dass der Endnutzer ein Endgerät 10 wie z. B. ein VR-Headset zur Wiedergabe des 360°- Live Videostreams nutzen kann. Dazu kann das VR-Headset mit der App auf dem Endgerät 10 gekoppelt werden, um eine Übertragung bzw. Streaming des 360°- Live Videostreams auf das VR-Headset als Endgerät 10 zu ermöglichen.

In einem Ausführungsbeispiel kann beispielsweise zwischen dem Endgerät 10 und dem Server-System 30 bei der Übertragung des 360°- Live Videostreams eine Steuerverbindung für die Synchronität des übertragenen Livestreams zum Live-Event vorgesehen sein. Dazu kann beispielsweise die Applikation zum Übertragen eines 360°- Live Videostreams bei der Steuerung der Synchronisierung verwendet werden. In einem Beispiel kann diese Steuerverbindung zwischen dem Stitching-Server 32 und dem Endgerät 10 vorgesehen sein, um die synchrone Übertragung des Livestreams zu gewährleisten. In einem anderen Beispiel kann diese Steuerverbindung zwischen dem Stitching-Server 32, dem Cloud-Server 34 als dezentraler Server und dem Endgerät 10 vorgesehen sein.

Die Steuerverbindung dient zum kontinuierlichen Austausch von Informationen und Signalen, zwischen den beispielhaft genannten Geräten 10, 32, 34. Beispielsweise können Protokolle für zeitkritische Kommunikation über die Steuerverbindung in beide Richtungen zwischen den Geräten 10, 32, 34 übertragen werden, wie z. B. ein Precision Time Protocol (PTP) für hochpräzise Zeitmessungen in Netzwerken.

Das Server-System 30 oder der Server 30 kann eine Information hinsichtlich einer Synchronität des übertragenen einen der wenigstens zwei 360°-Live-Videostreams von dem Endgerät 10 über die Steuerverbindung zwischen Endgerät 10 und Server-System 30 empfangen. Im nächsten Schritt kann der Server 30 die empfangene Information auf Basis eines Analysemodells analysieren. Das Analysemodell kann die Konformität eines vorgegebenen Schwellwerts hinsichtlich einer Synchronität des 360°-Live-Videostream durch einen Vergleich von Synchronitätsinformationen für das Server-System 30 und das Endgerät 10 bestimmen. Eine Synchronitätsinformation kann beispielsweise einen Zeitstempel umfassen. Auf Basis der Analyse kann dann der Server 30 eine Information über die Steuerverbindung an das Endgerät 10 senden, um die gesendete Information auf dem Endgerät 10 auszugeben. In einem weiteren Schritt kann der Server 30 eine Anpassung des übertragenen einen der wenigstens zwei 360°-Live-Videostreams auf Basis der Analyse der empfangenen Information initiieren. Beispielsweise kann der Stitching-Server 32 eine Anpassung des zusammengesetzten Livestreams ausführen, um einen synchronen Livestream wieder zu übertragen.

Da die übertragenen Livestreams Echtzeitdaten umfassen, könnte z.B. eine Verwendung von übertragenen Zeitstempeln so ausgestaltet, dass eine Latenz zwischen dem Live-Ereignis und dem Empfang der Daten auf dem Endgerät 10 zu minimieren. D. h., dass die Zeitstempel nicht nur beim Starten des Livestreams zwischen dem Endgerät 10 und dem Server 30 ausgetauscht werden, sondern kontinuierlich während der gesamten Übertragung ausgetauscht werden sollten, um eine Synchronität zwischen Übertragung und Live-Ereignis zu ermöglichen. Dazu kann ein Schwellwert oder ein Synchronitätsfenster spezifiziert werden. Es sollte ein Schwellwert von kleiner gleich 10 Sekunden bezüglich einer Synchronität zwischen zwei Zeitstempeln vorgesehen sein, um eine merkliche Verzögerung für den Endnutzer zu vermeiden.

Aufgrund von Netzwerkvariationen und Latenzschwankungen sollten das Endgerät 10 und der Server 30, 32, 34 Zeitstempel dynamisch anpassen, um sicherzustellen, dass die Livestream-Daten synchronisiert bleiben. Dies kann durch die Berücksichtigung von Netzwerkverzögerungen und die Anpassung der Übertragungszeitpunkte erfolgen.

Im einem Falle das der vorgegebene Schwellwert erreicht werden könnte oder überschritten wurde, kann das Endgerät 10 bzw. die Applikation auf dem Endgerät 10 eine Nachricht bzw. ein Signal an den Server 30 senden, dass die Synchronität des Livestreams nicht mehr gegeben sein könnte oder ist. Diese Information vom Endgerät 10 an den Stitching-Server 32 bewirkt eine Fehlerkorrektur dahingehend, dass das Zusammensetzen oder Stitchen des Livestreams in Echtzeit so angepasst wird, dass eine Synchronität des Livestreams wiederhergestellt wird.

Dieser Prozess hinsichtlich des Schwellwerts bzw. einer fehlenden Synchronität kann auch serverseitig, z.B. vom Cloud-Server 34 angewendet werden. Die vom Endgerät empfangene dahingehende Information kann optional auf dem Endgerät 10 als Information visuell oder akustisch ausgegeben werden, um den Endnutzer über den Status seiner Livestream-Übertragung zu informieren. Dazu kann beispielsweise die Benutzeroberfläche der Applikation vorgesehen sein.

Ferner kann das Endgerät 10 oder der Server 30 adaptive Algorithmen verwenden, die die Synchronisation basierend auf der Qualität der Netzwerkverbindung und den aktuellen Latenzbedingungen anpassen. Wenn die Latenz zunimmt oder die Netzwerkverbindung instabil wird, kann das Endgerät 10 oder der Server 30 die Synchronisationsstrategie dynamisch anpassen, um eine optimale Leistung beizubehalten.

Alternativ kann das Endgerät 10 bzw. das Server-System 30 priorisierte Steuersignale über die Steuerverbindung senden, um die Aktualisierung von Zeitstempeln zu priorisieren und sicherzustellen, dass sie kontinuierlich und mit hoher Frequenz aktualisiert werden, um die Synchronität des Livestreams zu gewährleisten. Dies kann dazu beitragen, Latenzprobleme zu minimieren und eine reibungslose Livestream-Übertragung sicherzustellen.

Als eine weitere Möglichkeit kann das Endgerät 10 oder der Server 30, insbesondere der Cloud-Server 34, prädiktive Modelle verwenden, um zukünftige Latenzschwankungen vorherzusagen und entsprechende Maßnahmen zu ergreifen, um die Synchronisation proaktiv anzupassen. Durch die Analyse von historischen Daten und Verhaltensmustern von früher übertragenen Livestreams kann das Endgerät 10 oder der Server 30 die Synchronisation optimieren, um potenzielle Latenzprobleme zu antizipieren und zu mildern.

Durch die Implementierung dieser Steuerungsmöglichkeiten kann das Endgerät die Synchronisation des Livestreams effektiv steuern und anpassen, um eine optimale Leistung und eine nahtlose Übertragung zu gewährleisten.

In weiteren einem Ausführungsbeispiel kann ein Endnutzer einen Stream auswählen 403 und starten und tritt damit in das Virtual Reality Event ein. Bei einem Fußballspiel als Virtual Reality Event kann der Endnutzer in einer bestimmten Position im Stadion virtuell platziert werden oder aus einer bestimmten Perspektive das immersive 360° Stereo-Erlebnis verfolgen. Mittels einer Benutzeroberfläche in dem VR-Headset, welche mit der App gekoppelt ist, kann der Endnutzer zwischen den verfügbaren Live-Streams wechseln, um z.B. verschiedene Bereiche des Stadions zu erkunden bzw. das Spiel aus verschiedenen Blickwinkeln zu betrachten.

In einem weiteren Ausführungsbeispiel (nicht abgebildet) kann der Cloud-Server 34 hinsichtlich einer Nutzerprofilierung und einem Adaptive Content Delivery maschinelles Lernen und/oder eine Datenanalyse nutzen, um ein umfassendes Profil jedes Endnutzers zu erstellen. Dieses Profil umfasst Streaming-Präferenzen, Interessen und bisherige Interaktionsmuster. Basierend auf diesen Profilen passt der Cloud-Server 34 oder der dezentrale Server 34 eine Auslieferung der Inhalte in Echtzeit an, um ein personalisiertes und ansprechendes Erlebnis zu bieten. Der dezentrale Server 34 kann ferner KI-Algorithmen anwenden, um sowohl aktive Auswahlentscheidungen als auch passive Verhaltensdaten zu verarbeiten. Diese Daten können beispielsweise die Verweildauer auf bestimmten Szenen oder die Häufigkeit des Anschauens spezifischer Inhalte umfassen. Basierend auf diesen Daten kann die Plattform Vorlieben ermitteln und das Angebot und die Präsentation von Inhalten entsprechend anpassen.

In einem anderen Ausführungsbeispiel kann der Cloud-Server 34 ein nutzergeleitetes Feedback-System bereitstellen. Dieses System ermöglicht es den Nutzern, aktiv Feedback zu geben. Dies kann durch Bewertungen, Kommentare oder direkte Kontrolle über die Inhaltssteuerung erfolgen. Dieses Feedback kann dann genutzt werden, um das Gesamterlebnis zu verfeinern und anzupassen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Endgerät

- 20: VR-Applikation

- 30: Server-System, Server
- 31: 360 Kamera
- 32: Stitching Server
- 33: CDN, Server
- 34: dezentraler Server, Cloud-Server

- 100: Verfahren zur Übertragung
- 101: erster Verfahrensschritt
- 102: zweiter Verfahrensschritt
- 103: dritter Verfahrensschritt
- 104: vierter Verfahrensschritt

- 200: Verfahren zum Abrufen
- 201: erster Verfahrensschritt
- 202: zweiter Verfahrensschritt
- 203: dritter Verfahrensschritt

## Patentansprüche

1. Ein Verfahren (100) zur Übertragung von 360°- Live Videostreams eines Virtual Reality Live Ereignisses in Echtzeit, wobei das Verfahren (100) durch ein Server-System (30) wiederholt und in beliebiger Reihenfolge durchgeführt wird:
- Bereitstellen (101) von wenigstens zwei 360°- Live-Videostreams in 3D,
wobei ein jeweiliger 360°- Live-Videostream aus mehreren, zueinander synchronen 2D-Kamerabildern erstellt wird, und wobei jeder der wenigstens zwei 360°-Live-Videostreams jeweils eine andere Perspektive des VR-Live Ereignisses für einen Endnutzer spezifiziert,
- Empfangen (102) einer Anfrage von einem Endgerät (10) des Endnutzers für einen Abruf eines der wenigstens zwei 360°-Live-Videostreams auf Basis einer ausgewählten Perspektive durch den Endnutzer,
- Zuordnen (103) des einen der wenigstens zwei 360°-Live-Videostreams basierend auf der empfangenen Anfrage für den Abruf, um den angefragten 360°-Live-Videostream zu übertragen,
- Übertragen (104), an das Endgerät (10), des einen der wenigstens zwei 360°-Live-Videostreams basierend auf dem Zuordnen (103).

2. Verfahren nach Anspruch 1,
wobei das Übertragen (104) die weiteren nachfolgenden Schritte umfasst:
- Starten des Übertragens (104) des einen der wenigstens zwei 360°-Live-Videostreams, wobei eine Übertragungsrate während einer Startphase der Übertragung zunächst eine niedrige Bitrate aufweist, um ein schnelles Starten zu ermöglichen,
- Anpassen der Übertragungsrate des gestarteten einen der wenigstens zwei 360°-Live-Videostreams basierend auf dem Verhältnis zwischen Bildqualität und Übertragungsrate, um unabhängig von der Verbindung des Endnutzers eine kontinuierliche Wiedergabe zu gewährleisten.

3. Verfahren nach einem der vorhergehenden Ansprüche,
wobei das Übertragen (104) die weiteren nachfolgenden Schritte umfasst:
- Empfangen einer Nachricht umfassend eine Information bezüglich einer ermittelten Änderung einer Blickrichtung des Endnutzers für den an das Endgerät (10) übertragenen 360°- Live Videostream,
- Anpassen des übertragenen 360°-Live Videostream in Abhängigkeit der ermittelten Änderung der Blickrichtung des Endnutzers, wobei das Anpassen auf Basis eines Algorithmus, insbesondere eines Codecs, erfolgt, wobei der Algorithmus in Echtzeit eine Auflösung für einen Bildausschnitt des übertragenen 360°-Live Videostreams bestimmt, welcher der geänderten Blickrichtung des Endnutzers entspricht.

4. Verfahren nach einem der vorhergehenden Ansprüche, wobei das Verfahren den weiteren nachfolgenden Schritt umfasst:
- Generieren einer Liste für die Zuordnung eines angefragten Abrufs bezüglich der bereitgestellten wenigstens zwei 360°-Live-Videostreams, wobei die Liste für jeden der wenigstens zwei 360°-Live-Videostreams eine eindeutige Adresse, insbesondere eine URL, aufweist.

5. Verfahren nach einem der vorhergehenden Ansprüche,
wobei das Empfangen (102) den weiteren nachfolgenden Schritt umfasst:
- Empfangen einer weiteren Anfrage von dem Endgerät des Endnutzers für einen Abruf eines anderen der wenigstens zwei 360°-Live-Videostreams auf Basis eines Wechsel der ausgewählten Perspektive durch den Endnutzer.

6. Verfahren (100) nach einem der vorhergehenden Ansprüche,
wobei das Verfahren (100) die weiteren nachfolgenden Schritte umfasst:
- Empfangen von mehreren, zueinander synchronen 2D-Kamerabildern in Echtzeit,
- Erstellen von wenigstens zwei 360°- Live Videostreams in 3D auf Basis der empfangenen, zueinander synchronen 2D-Kamerabilder durch einen Stitching-Server (32) des Server-Systems (30), wobei mehrere synchron aufgenommene 2D-Kamerabilder wenigstens einen 360°- Live Videostream in 3D in Echtzeit spezifizieren.

7. Verfahren nach einem der vorhergehenden Ansprüche,
wobei das System (30) einen dezentrale Server (34), umfasst, wobei der dezentrale Server (34) das Übertragen von Anfragen und/oder das Übertragen des einen der wenigstens zwei 360°-Live-Videostreams für das Endgerät (10) koordiniert,
wobei das Empfangen (102) den nachfolgenden Schritt umfasst:
- Empfangen einer Anfrage von dem dezentralen Server (20) für den Abruf eines der wenigstens zwei 360°-Live-Videostreams auf Basis einer ausgewählten Perspektive durch den Endnutzer, wobei der Endnutzer seine Auswahl des einen der wenigstens zwei 360°-Live-Videostreams mittels des Endgeräts (10) an den dezentralen Server (34) zur Weiterleitung an das System (30) übermittelt,
und wobei das Übertragen (104) den nachfolgenden Schritt umfasst:
- Übertragen des einen der wenigstens zwei 360°-Live-Videostreams an den dezentralen Server (34) zur Zwischenspeicherung, insbesondere zur Optimierung und/oder zur Weiterleitung des einen der wenigstens zwei 360°-Live-Videostreams an das Endgerät (10), um eine kontinuierliche Wiedergabe zu gewährleisten.

8. Verfahren nach Anspruch 7,
wobei der dezentrale Server (34) als, vorzugsweise virtueller, Cloud-Server (34) ausgebildet ist.

9. Verfahren nach einem der vorhergehenden Ansprüche,
wobei das Verfahren (100) die weiteren nachfolgenden Schritte umfasst:
- Empfangen einer Information hinsichtlich einer Synchronität des übertragenen (104) einen der wenigstens zwei 360°-Live-Videostreams von dem Endgerät (10) über eine Steuerverbindung zwischen Endgerät (10 und Server-System (30),
- Analysieren der empfangenen Information auf Basis eines Analysemodells, wobei das Analysemodell die Konformität eines vorgegebenen Schwellwerts hinsichtlich einer Synchronität des 360°-Live-Videostream durch einen Vergleich von Synchronitätsinformationen für das Server-System (30) und das Endgerät (10) bestimmt, wobei vorzugsweise eine Synchronitätsinformation wenigstens einen Zeitstempel umfasst,
- Senden einer Information auf Basis der Analyse über die Steuerverbindung an das Endgerät (10), um die gesendete Information auf dem Endgerät (10) auszugeben,
- Initiieren einer Anpassung des übertragenen (104) einen der wenigstens zwei 360°-Live-Videostreams auf Basis der Analyse der empfangenen Information.

10. Server-System (30) zur Übertragung von 360°- Live Videostreams eines Virtual Reality Live Ereignisses in Echtzeit, umfassend:
- ein 360°- Stereobild-Kamerasystem (31), wobei das Kamerasystem (31) wenigstens zwei 360°- Stereobild - Kameras für eine Aufnahme eines Virtual Reality Live Ereignisses umfasst, wobei eine 360°- Stereobild - Kamera eine kreisförmige Anordnung von mehreren 2D-Kameras aufweist,
- ein Stitching-Server (32) für ein Erstellen von 360°- Live Videostreams in 3D basierend auf den in Echtzeit empfangenen mehreren 2D-Kamerabildern,
- einen oder mehrere, vorzugsweise virtuelle, Server (33) für die Bereitstellung von wenigstens zwei 360°- Live Videostreams in Echtzeit, welche als eine in skalierbare Cloud-Plattform ausgebildet sind, um ein Live-Streaming in Echtzeit an ein Endgerät (10) eines Endnutzers auszuführen,
wobei das System (30) dazu ausgebildet ist, das Verfahren (100) nach einem der vorhergehenden Ansprüche auszuführen.

11. Computerprogramm (50) für ein Server-System (30), umfassend Befehle, die bei der Ausführung des Computerprogramms (50) durch das Server-System (30) dieses veranlassen, das Verfahren (100) nach einem der Ansprüche 1 bis 9 auszuführen.

12. Ein Verfahren (200) zum Abrufen eines 360°-Live-Videostreams eines Virtual Reality Live Ereignisses in Echtzeit, umfassend die nachfolgenden Schritte:
- Auswählen (201) eines 360°- Live Videostreams, welcher auf einer Benutzeroberfläche eines Endgeräts (10) angezeigt wird, wobei jeder der angezeigten 360°-Live-Videostreams jeweils eine andere Perspektive des VR-Live Ereignisses für einen Endnutzer spezifiziert,
- Senden (202) einer Anfrage an ein Streaming-Server-System (30) basierend auf dem Auswählen, um den 360°- Live Videostream abzurufen,
- Empfangen (203) des an das Endgerät (10) übertragenen 360°- Live Videostreams auf Basis der gesendeten Anfrage, um eine Teilnahme an dem VR-Live Ereignis zu ermöglichen.

13. Endgerät (10) zum Abrufen eines 360°-Live-Videostreams eines Virtual Reality Live Ereignisses in Echtzeit, wobei das Endgerät (10) dazu ausgebildet ist, das Verfahren (200) nach Anspruch 12 auszuführen.

14. Computerprogramm (15) für ein Endgerät (10), umfassend Befehle, die bei der Ausführung des Computerprogramms (15) durch das Endgerät (10) dieses veranlassen, das Verfahren (200) nach Anspruch 12 auszuführen.
